# EUROPEAN PATENT SPECIFICATION

(11) **EP 2 453 509 B1**
(45) Date of publication and mention of the grant of the patent: **06.03.2013**
(21) Application number: 10190599.0
(22) Date of filing: 10.11.2010
(51) Int. Cl.: H01M 8/24, H01M 8/00, H01M 8/04

(54) **Frame Incorporating a Fuel Cell for an Electronic Portable Device**
Rahmen mit einer Brennstoffzelle für eine tragbare elektronische Vorrichtung
Cadre incorporant une pile à combustible pour dispositif électronique portable

(43) Date of publication of application: 16.05.2012
(73) Proprietor: Research In Motion Limited, Waterloo, ON N2L 3W8 (CA)
(72) Inventor: Guthrie, Martin George Albert, Waterloo Ontario N2L 5R9 (CA)
(74) Representative: Moore, Barry

(56) References cited:
- US-A1- 2007 090 786
- US-A1- 2009 081 523
- US-A1- 2010 035 102

## Description

Various embodiments herein relate generally to the field of fuel cells. More particularly, embodiments herein relate to electronic portable devices wherein the frame of the device has a fuel cell incorporated therein.

Fuel cells have received significant attention in recent years for their potential benefits for electricity generation with a relatively low environmental impact. The basic principles of fuel cells have been understood for a long time, but they have seen little widespread use due to their comparatively high cost of production and the difficulty in managing their operation.

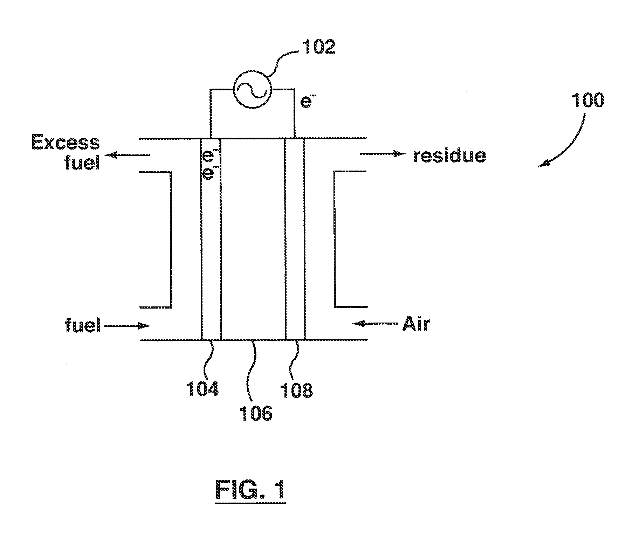

An exemplary arrangement of a fuel cell is schematically depicted in Figure 1. Generally, a fuel cell is an electrochemical conversion device that produces electricity from a reaction between a fuel and an oxidant in the presence of an electrolyte. In operation, the fuel and the oxidant flow into the fuel cell, thereby producing electricity, and a residue that flows out. For example, in the case of a hydrogen fuel cell, hydrogen is used as the fuel and oxygen (or air) is used as the oxidant, while water is produced as a residue (either liquid or gaseous).

Unlike batteries that chemically store electrical energy, fuel cells consume reactants to produce electrical energy, thus requiring replenishment to maintain the reaction. Therefore, a fuel cell is normally accompanied by a fuel tank to store and provide fuel as needed.

Each type of fuel cell has corresponding operating characteristics that render it suitable for various applications. In applications where space is limited, incorporating a fuel cell may be particularly challenging for one or more of the following reasons: the size of the fuel cell and fuel tank, the need to replenish the reactants, the need to store or evacuate the residue produced by the reaction, the operating temperature of the fuel cell, and operating temperature of the device in which the fuel cell is to be integrated. Despite these difficulties, fuel cells remain a promising technology.

U.S. Published Patent Application No. 2010/035102 discloses a fuel cell system for a portable electronic device including one or more fuel storage components, adapted to store and deliver a fuel, one or more electronic components and one or more fuel cells in contact with at least one of the one or more fuel storage components and one or more electronic components. The one or more fuel storage components are adapted to provide a secondary function, in addition to storing and delivering fuel.

U.S. Published Patent Application No. 2007/090786 discloses providing thin layers of fuel cells on the housings of portable electrically-powered devices. The fuel cells provide electrical power for the devices. The fuel cell layers can follow contours of the device housings. Some embodiments provide fuel plenums between a surface of the housing and a fuel cell layer. The fuel plenum may carry a fuel such as hydrogen gas to fuel cells of the fuel cell layer.

U.S. Published Patent Application No. 2009/081523 discloses fuel cell covers, electronic systems and methods for optimizing the performance of a fuel cell system. In the various embodiments, a fuel cell cover includes an interface structure proximate to one or more fuel cells. The interface structure is configured to affect one or more environmental conditions proximate to the one or more fuel cells. The electronic system includes an electronic device, one or more fuel cells operably coupled to the electronic device, and an interface structure proximate to the one or more fuel cells. The interface structure affects one or more environmental conditions near or in contact with the one or more fuel cells. The method includes providing a fuel cell layer, and positioning an interface layer proximate to the fuel cell layer.

### GENERAL

In one broad aspect, some embodiments described herein may relate to a frame for an electronic portable device. The frame may comprise at least one fuel cell, at least one inlet for introducing fuel into the at least one fuel cell, at least one drain for draining a residue produced by a reaction of the at least one fuel cell, and a connector for electrically connecting the at least one fuel cell to the electronic portable device.

In another broad aspect, some embodiments described herein may relate to an electronic portable device comprising at least one electronic component, and a frame for embedding the at least one electronic component therein. More particularly, the frame includes at least one fuel cell, each fuel cell being adapted to power (at least in part) the at least one electronic component.

### BRIEF DESCRIPTION OF THE DRAWINGS

For a better understanding of embodiments described herein, and to show more clearly how they may be carried into effect, reference will now be made, by way of example, to the accompanying drawings.

Figure 1 is a schematic view of a fuel cell adapted to provide electrical power to an electrical load.

Figure 2 is a partially exploded schematic perspective view of an electronic portable device.

Figure 3 is a cross-sectional view of a frame of an electronic portable device including a fuel cell.

Figure 4 is an exploded schematic view of a partial frame of an electronic portable device including a fuel cell.

Figure 5 is an exploded schematic view of a partial frame of an electronic portable device including a fuel cell with residue channels and a residue tank.

Figure 6 is an exploded schematic view of a partial frame of an electronic portable device with a fuel tank and fuel channels.

Figure 7 is an exploded schematic view of a partial frame of an electronic portable device with electrical connectors.

Figure 8 is a cross-sectional view of a frame of an electronic portable device including a fuel tank.

Figure 9 is a cross-sectional view of a frame of an electronic portable device including a residue tank.

Figure 10 is a cross-sectional view of a frame of an electronic portable device including a fuel cell and a fuel tank.

### DETAILED DESCRIPTION

Illustrated for example in Figure 1 is a fuel cell 100 coupled to an electric load 102, which may be of any number of different components of an electronic portable device, such as a mobile phone, smart phone, a personal digital assistant, a portable video game console, a tablet computer, media player or any other electronic portable device. As shown, the fuel cell 100 includes an anode 104, an electrolyte 106, and a cathode 108.

As will be discussed below, the electronic portable device includes one or more electronic components, and at least one of the electronic components may be powered (at least in part) by the fuel cell 100.

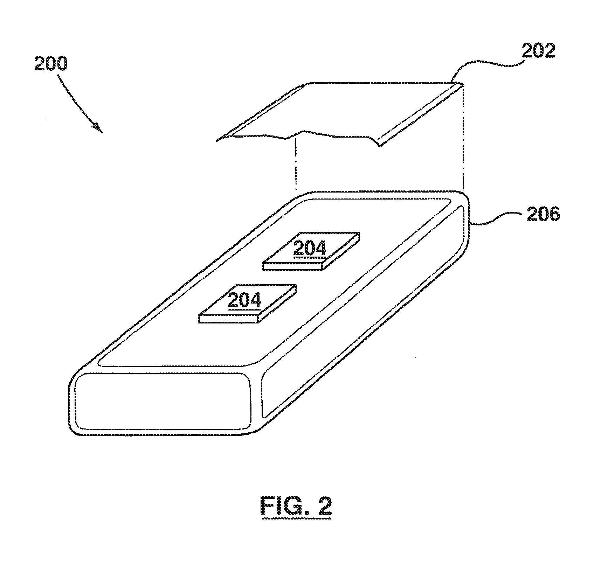

Turning now to Figure 2, illustrated therein is a partially exploded schematic view of an electronic portable device 200 according to some embodiments. The electronic portable device 200 generally includes a casing 202, at least one electronic component 204, and a frame 206.

The casing 202 (of which only a cutout portion is shown on Figure 2) generally forms an outer shell that protects (at least in part) the electronic components 204. The casing 202 may also generally provide a device-handling surface for a user using the electronic portable device 200. In many instances, the casing also provides a visually appealing look to the device 200.

Typically, the electronic portable device 200 will include many electronic components 204, however in Figure 2 only two electronic components 204 are shown for clarity. For example, the electronic components 204 may include any electronic device or circuit, such as a screen, a keyboard, a mouse, a microprocessor, a codec, a memory, a USB card driver, a radio transceiver, and so on.

Electrical power is normally required to power at least some of the electronic components 204. The amount of electrical power required may vary between electronic components 204 and during operation of the electronic portable device 200 (e.g. power consumption of a screen and processor may be reduced when the electronic portable device 200 is in a sleep mode and increased when a user is composing an email of viewing videos on the portable electronic device 200).

In various embodiments, the various electronic components 204 may be independently connected to a power source, or one or more of the electronic components 204 may be connected to a common power bus.

As shown in Figure 2, the frame 206 may be adapted to receive and be covered by the casing 202. Furthermore, the frame 206 may be adapted to at least partially support one or more of the electronic components 204. The frame 206 generally protects the electronic components 204 from impact that could damage the components 204. The frame 206 may be made from a material that is rigid enough to support the electronic components 204 and to absorb impacts to the electronic portable device 200.

Although shown as being of a regular shape on Figure 2, the frame 206 can have various shapes, forms and dimensions. For example, the frame 206 can be irregularly shaped and configured for embedding at least some or all parts of the device 200 thereon.

In some embodiments, the frame 206 may be designed so as to totally encompass the electronic components 204 therein. For example, the frame 206 may occupy any and all free space between the electronic components 204, thus eliminating or at least greatly reducing any possible displacement of the electronic components 204 within the device 200.

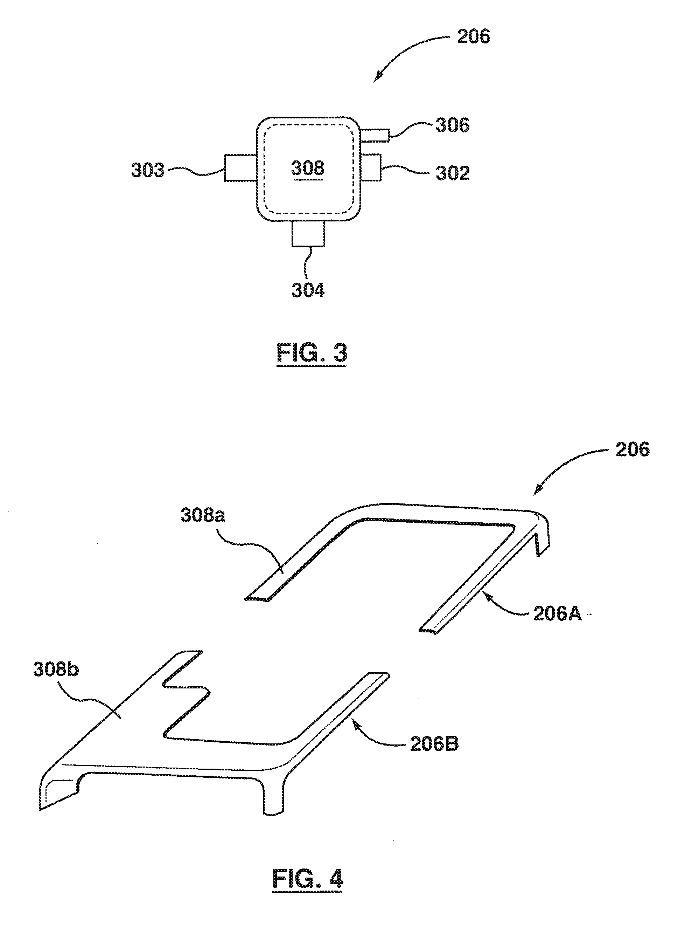

Turning now to Figure 3, illustrated therein is a cross-sectional view of a portion of the frame 206. As shown, the frame 206 may have a square shaped cross-section with rounded corners. In other embodiments, the frame 206 may have a rectangular cross-section, an oval cross-section, a round cross-section, or varying cross-sections along the length of the frame 206. Generally, the frame 206 may have other suitable cross-sectional shapes selected to adapt to, and support, the electronic components 204 of the electronic portable device 200.

As shown in Figure 3, in some embodiments, at least a section of the frame 206 includes a fuel cell 308. The fuel cell 308 may have any suitable cross-sectional shape that allows for operation of the fuel cell 308 within the frame 206. For example, in Figure 3 the fuel cell 308 is centrally positioned within the cross-section of the frame 206. However, in other embodiments, the fuel cell 308 may be located at other positions within the cross-section of the frame 206 (e.g. offset from a central position).

In some embodiments, the fuel cell 308 may completely occupy the frame 206. In other embodiments, the fuel cell 308 may occupy only a portion of the frame 206.

In some embodiments, the fuel cell 308 may form the frame 206. In some embodiments, the frame 206 may further incorporate multiple fuel cells 308 that may be interconnected or independent from each other.

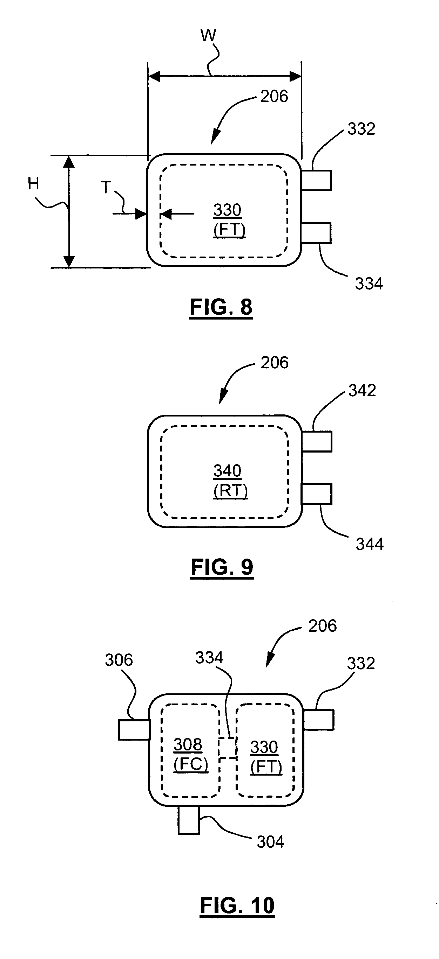

In some embodiments, the frame 206 may be distinct from a fuel cell, such as when the frame 206 stores fuel to be utilized by a fuel cell deployed elsewhere, and in such embodiments, it may be said that the frame 206 does not include the fuel cell (see for example Figure 8)

The fuel cell 308 may be any type of fuel cell, such as for example a proton exchange membrane fuel cell, a direct methanol fuel cell, an alkaline fuel cell, a solid oxide fuel cell, and so on.

When the fuel cell 308 occupies only a portion of the cross-section of the frame 206, the remaining portion of the cross-section of the frame 206 may include a complimentary material selected so as to provide rigidity and protect the fuel cell 308.

As various types of fuel cell normally each have particular operating characteristics, the exterior of the fuel cell 308 may be covered by a material selected according to the operating characteristics for that particular fuel cell 308. For example, the exterior of the fuel cell 308 may be covered by an insulating material for absorbing or shedding (or both) heat generated by the fuel cell 308.

In some embodiments where the fuel cell 308 occupies the entire cross-section of the frame 206, the fuel cell 308 may provide electrical power as well as structural rigidity to the electronic portable device 200.

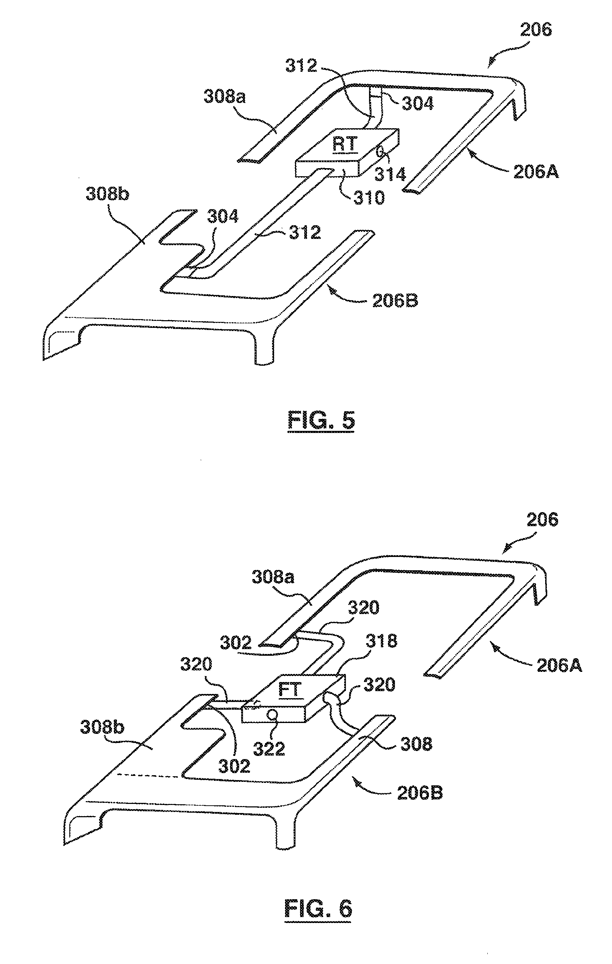

During use, fuel (e.g. hydrogen) will react with an oxidant (e.g. oxygen or air) in the fuel cell 308. The fuel is stored in a fuel storage element (sometimes called a "fuel tank"). In some embodiments, the frame 206 may include the sole fuel storage element for the portable electronic device 200. In other embodiments, the frame 206 may be one of two or more fuel storage elements. In yet other embodiments, a fuel storage element may be separate from the frame 206 (see for example Figure 6).

During use, fuel is normally dispensed from the fuel storage element to the fuel cell 308. As shown, the fuel cell 308 has at least one fuel inlet 302 for supplying the dispensed fuel to the fuel cell 308, and at least one drain 304 for draining the residue generated by the fuel cell reaction.

In some embodiments, the residue may be vented directly into the ambient environment. In other embodiments, residue may be stored in a residue tank (see for example Figure 5). In some embodiments, the frame 206 may comprise a residue tank (see For example Figure 9).

In some embodiments, the fuel cell 308 may include one or more inlets 302 and one or more drains 304. For example, in embodiments where the fuel cell 308 is shaped in such a manner that the fuel must follow a sinuous channel, the fuel cell 308 may include multiple inlets 302 to facilitate refueling of the fuel cell 308.

In some embodiments, as the frame 206 may include a plurality of independent fuel cells 308, at least one inlet 302 may be provided for each independent fuel cell 308. In other embodiments, a common inlet 302 may be shared by the various independent fuel cells 308.

For liquid fuel cells (i.e. fuel cells having a liquid electrolyte), a liquid inlet 303 may also be provided for introducing the electrolyte into the fuel cell 308.

In some fuel cells, where the oxidant used is oxygen, oxygen from ambient air may be allowed to flow through an exterior shell or an air input (or both) of the fuel cell 308 to a cathode located in the fuel cell 308.

In use, the fuel cell 308 produces electrical power from the reaction between the fuel and the oxidant through the electrolyte. This electrical power may then be drawn from the fuel cell 308 using at least one electrical connector 306.

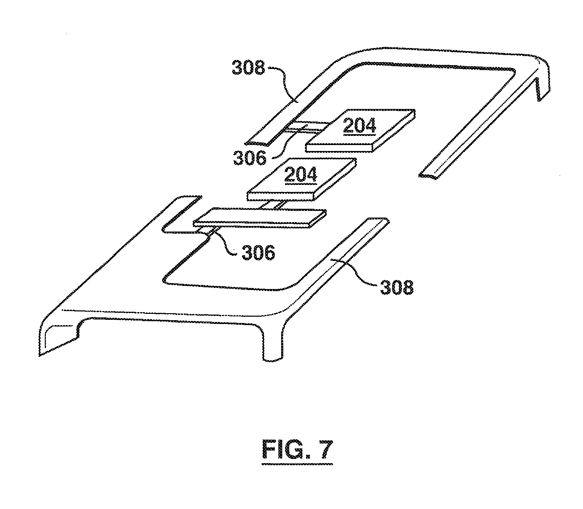

Reference is now concurrently made to Figure 7, which schematically depicts various embodiments of electrical connections that may be made. In some embodiments, one or more electrical connectors 306 may be adapted for electrically connecting the fuel cell 308 directly to the one or more electronic components 204. In other embodiments, one or more electrical connectors 306 may be adapted for connecting to a power bus.

In some embodiments, each fuel cell 308 may have its own electrical connector 306. In various embodiments, each fuel cell 308 may be connected to a different electronic component 204, a plurality of fuel cells 308 may be connected to the same electronic component 204, or some or all of a plurality of fuel cells 308 may be connected to the power bus.

Turning now to Figure 4, shown therein is an exploded schematic view of a frame 206 composed of multiple sections, for example a first section 206a and a second section 206b. At least one of the sections 206a, 206b includes a fuel cell 308, for example a first fuel cell 308a and a second fuel cell 308b.

As can be appreciated, each of the fuel cells 308a, 308b may be of various shapes, such as a regular shape or an irregular shape, and may be shaped to correspond to the available room in between the electronic components 204 of the device 200.

Some sections of the frame 206 may include one or more fuel cells (e.g. fuel cell 308), one or more fuel tanks (e.g. fuel tank 330 as described below), one or more residue tanks (e.g. residue tank 340 as described below), or some combination of fuel cell, fuel tank and residue tank, while other sections of the frame may not.

In some embodiments, one section of the frame 206 (e.g. the first section 206a) may be adapted to fixedly and securely interlock to another section (e.g. the second section 206b) of the frame 206, so as to form a complete frame 206 when attached.

In other embodiments, the frame 206 may be made in one piece, within which one or several independent or interdependent fuel cells 308, fuel tanks 330, and residue tanks 340 may be embedded.

The frame 206 may further be adapted for securing the electronic components 204 therein. For example, in some embodiments the frame 206 may form a ridge positioned along a periphery of the electronic portable device 200 for clipping the casing 202 thereto, for aligning two portions of the casing 202 therewith, and so on.

Reference is now made to Figure 5, which represents an exploded schematic view of a partial frame including two fuel cells 308 (e.g. the first fuel cell 308a and a second fuel cell 308b) and a residue tank 310 that is separate from the frame 206. Each of the fuel cells 308a, 308b produces a residue during operation. The residue exits the fuel cells 308a, 308b through one or more drains 304, and is then transported to a residue tank 310 through one or more residue channels 312.

As various types of fuel cells exist, different electrochemical reactions may occur, resulting in their corresponding residue. In some embodiments, the frame 206 may be adapted to the requirements of various types of fuel cells 308a, 308b based on the location of the drain 304 or other characteristics.

In some embodiments, one or more additional outlets (e.g. liquid or gaseous) may be provided so as to collect reaction residues and ensure proper functioning of the fuel cells 308a, 308b.

For example, in the case of an alkaline fuel cell, the reaction at an anode is as follows:

2*H*₂ + 4*OH*⁻ ⇒ *4H*₂*O* + 4*e*⁻

while the reaction at a cathode is as follows:

*O* ₂ + 2*H*₂*O* + 4*e*⁻ ⇒ 4*OH*⁻

Thus the reaction between the hydrogen and oxygen (through the electrolyte) generates water residue and heat. For such an alkaline fuel cell, the drain 304 may be located on an anode side of the fuel cell 308 to collect the water residue.

In the case of a proton exchange membrane fuel cell, the reaction at the anode and cathode are as follows (respectively):

2*H*₂ ⇒ 4*H*⁺ + 4*e*⁻

*O* ₂ + 4*H*⁺ + 4*e*⁻ ⇒ 2*H*₂*O*

In this type of fuel cell, the residue is water generated at the cathode side. Thus the drain 304 will be located at the cathode side of the fuel cell 308 to collect the water residue. Furthermore, for this particular type of fuel cell, an additional outlet (not shown) may be provided for collecting excess fuel, which may then be returned to a fuel tank.

With respect to a direct methanol fuel cell, the reaction at the anode and cathode are represented by the following equations respectively:

*CH*₃ *OH* + *H*₂*O* ⇒ *CO*₂ + 6*H*⁺ + 6*e*⁻

3/2*O*₂ + 6*H*⁺ + 6*e*⁻ ⇒ 3*H*₂*O*

This type of fuel cell thus produces residues to be collected at both the anode and the cathode. A drain 304 is therefore located at the cathode side of the fuel cell 308 and collects the water, while an additional outlet is provided at the anode for collecting the CO₂.

As the fuel cell 308 operates within the electronic portable device 200, which may include electronic components 204 that are sensitive to humidity, the residue tank 310 may be adapted for collecting and storing the residue (e.g. water). However, since the fuel cell 308 will continue to produce residue when in use, the residue tank 310 may become full. Accordingly, to avoid overflow of the residue tank 310, the residue tank 310 may further include a residue output port 314 for discharging the collected residue at particular intervals.

For example, the residue output port 314 may be located at or near a periphery of the electronic portable device 200 so as to release one or more drops of water at particular intervals, when the residue tank 310 has been filled to a certain volume of residue, and so on.

Alternatively, the drain 304 of the fuel cell 308 (if conveniently located with respect to an exterior of the device 200) may directly drain the residue outside of the device 200.

Another option may further be to heat the water residue in the residue tank 310 so as to release the residue as water vapor through the residue output port 314 (as opposed to liquid drops).

As can be appreciated, various techniques may be used to drain the residue from the fuel cell 308 to the exterior of the electronic portable device 200, including direct and indirect techniques.

Reference is now made to Figure 6, which is an exploded schematic view of a partial frame (having a first section 206a and a second section 206b). As discussed above, fuel is required to maintain the reaction in the fuel cells 308a, 308b. In this embodiment, a fuel tank 318 is provided separate from the frame 206. The fuel tank 318 connects to the fuel inlet 302 of the fuel cells 308a, 308b, for example through one or more fuel channels 320, or in some embodiments the fuel inlet 302 may be connected directly to the fuel tank 318.

The fuel channels 320 allow fuel from the fuel tank 318 to be supplied to the fuel inlet 302 of the fuel cells 308a, 308b. Generally the fuel inlet 302 may be located at the anode side of the fuel cells 308a, 308b.

In some embodiments, a network of fuel channels 320 may be provided to transport fuel to a series of fuel cells in a sequential manner. Alternately, a network of fuel channels 320 may be adapted to collect excess fuel from the fuel cells 308a, 308b. The fuel tank 318 may further include a fuel input port 322 for introducing fuel into the fuel tank 318. For convenience purposes, the fuel tank input port 322 may be located along a periphery of the device 200 so as to allow refueling through a fueling dock, for example.

Various techniques may be used for connecting the fuel channel 320 to the fuel inlet 302 and the residue channel 312 to the drain 304. For example, the fuel channel 320 may be connected to the fuel inlet 302 by mechanical means, chemical means, fusion, friction fits, or generally by any other permanent or detachable means. In some embodiments, the fuel channel 320 and residue channel 312 may be formed as one piece with the frame 206.

Turning now to Figure 8, in some embodiments one or more portions of the frame 206 of the electronic portable device 200 may include one or more fuel tanks 330 therein.

The fuel tank 330 may have any suitable cross-sectional shape that allows for operation of the fuel tank 330 within the frame 206. For example, in Figure 8 the fuel tank 330 is centrally positioned and generally spans the entire cross-section of the frame 206. However, in other embodiments, the fuel tank 330 may be located at other positions within the cross-section of the frame 206, and may occupy less than the entire cross section of the frame 206.

As shown, the fuel tank 330 may be connected to a fuel input port 332 for introducing fuel into the fuel tank 330, and a fuel channel 334 for supplying fuel to the fuel cell (e.g. fuel cell 308).

Turning now to Figure 9, in some in some embodiments one or more portions of the frame 206 of the electronic portable device 200 may include one or more residue tanks 340 therein. The residue tank 340 may have any suitable cross-sectional shape, for example, the residue tank 340 may be centrally positioned and generally span the entire cross-section of the frame 206. As shown, the residue tank 340 may be coupled to a residue channel 342 for transporting residue from the fuel cell (e.g. fuel cell 308) to the residue tank 340. The residue tank 340 may also be coupled to a residue output port 314 for discharging the collected residue therefrom.

Turning now to Figure 10, in some embodiments one or more portions of the frame 206 may include two or more of a fuel cell, a fuel tank and a residue tank. For example, in this embodiment the frame 206 includes a fuel cell 308 and a fuel tank 330. The fuel tank 330 is coupled to a fuel input port 332 for receiving fuel and a fuel channel 334 for supplying fuel to the fuel cell 308. The fuel cell 308 in turn includes a drain 304, which may be used to drain residue to a residue tank, and an electrical connector 306 for providing power to one or more electronic components 204.

At least some of the above concepts, and variations thereof, may realize one or more benefits. For example, many electronic portable devices, such as those mentioned previously (e.g., mobile phone, smart phone, personal digital assistant) are sized and shaped to be held in one or more human hands. For such small electronic portable devices, using fuel cells may present challenges that are different in magnitude and kind from those faced by larger fuel-cell-powered devices (e.g. industrial sized fuel cells or fuel cells in automobiles).

For example, some concepts as described herein may assist with miniaturization or space-saving demands (or both) that are applicable to handheld electronic portable devices.

Furthermore, some concepts as described herein may have the potential to support systems for supplying energy consistent with the needs of handheld electronic portable devices during ordinary operation (e.g. sending and receiving electronic messages, voice communication, consuming media content such as music and videos, etc.).

Furthermore, some concepts as described herein may cooperate with a number of other power-related technologies. For example, some concepts described herein may help enable an electronic portable device to be powered by a plurality of energy storing elements, such as one or more fuel cells, batteries, supercapacitors, and other energy storage devices. Some concepts as described herein may also be adapted to work in concert with a variety of shapes, sizes and configurations of electronic portable devices.

Some embodiments as described herein may result in reduced cost, as certain elements of an electronic portable device may perform multiple functions. In particular, the frame may provide structural integrity and aesthetic appeal as well as fuel storage, storing residue, and serving as a fuel cell for powering at least some of the electronic components of the portable electronic device, for example.

In some embodiments, various materials and combinations of materials may be used to make some or all of the components as described herein. For example, at least a portion of the frame 206 may be made of one or more materials such as polymers (including thermoplastics and thermosets, ABS, rubbers, silicone, etc.), metals (such as aluminum, magnesium, etc.), ceramics, composites (e.g. carbon fiber, Kevlar, etc.), and so on. In some embodiments, combinations of material may be used to provide desired aspects such as structural rigidity, toughness, reactivity, and so on. For example, metal components may be covered by one or more polymer components so as to inhibit contact between the metal components and the fuel in the fuel tanks or fuel cells (or both), which could be undesirable as certain fuels may react with certain metals.

In some embodiments, the size and shape of at least some of the components as described herein can be varied to accommodate portable electronic devices of various shapes and sizes.

For example, with specific reference to Figure 8, in some embodiments the thickness T of the walls of the frame 206 can be selected according to the size and shape of the portable electronic device. In some embodiments, the thickness T may be between 1/64 of an inch and 1/8 of an inch. In some embodiments, the thickness T may be between 1/32 of an inch and 1/16 of an inch.

In some embodiments, the cross-sectional height H of the frame 206 may also be selected according to the size and shape of the portable electronic device. In some embodiments, the height H of the frame 206 may be less than one inch. In other embodiments, the height H may be less than 0.75 inches. In other embodiments, the height H may be less than 0.5 inches. In other embodiments, the height H may be less than 0.25 inches.

In some embodiments, the cross-sectional width W of the frame 206 may also be selected according to the size and shape of the portable electronic device. In some embodiments, the width W of the frame 206 may be less than two inches. In other embodiments, the width W may be less than 1 inch. In other embodiments, the width W may be less than 0.5 inches.

In some embodiments, the volume of the frame 206 may be selected to accommodate fuel cells 308, fuel tanks 330, and residue tanks 340 of various sizes. For example, in some embodiments, the fuel cell 308 in the frame 206 may have a total volume of between 4 cubic inches and 1 cubic inch. In other embodiments, the fuel cell 308 in the frame 206 may have a total volume of less than 1 cubic inch. In yet other embodiments, the fuel cell 308 may have a volume greater than 4 cubic inches.

Similarly, in various embodiments the total volume of the fuel tank 330 or the residue tank 340 (or both) may be between 1 and 4 cubic inches, or less than 1 cubic inch, or greater than 4 cubic inches.

The foregoing aspects of the frame are provided for exemplary purposes only. Those skilled in the art will recognize that various changes in form, material used and design may be made thereto without departing from the scope of the appended claims.

## Claims

1. A frame (206) of an electronic portable device (200), the frame (206) comprising:
at least one fuel cell (308);
at least one inlet (302) adapted to introduce fuel into the at least one fuel cell (308);
at least one drain (304) adapted to drain a residue produced by a reaction of the at least one fuel cell (308); and
at least one connector (306) adapted to electrically connect the at least one fuel cell (308) to the electronic portable device (200).

2. The frame (206) of claim 1 wherein the at least one inlet (302) is adapted to be connected to a fuel channel (320) to supply fuel to the at least one inlet (302).

3. The frame (206) of any preceding claim wherein the at least one drain (302) is adapted to be connected to a residue channel (312) to collect the residue.

4. The frame (206) of any preceding claim wherein the frame (206) is further adapted to embed at least one electronic component therein (204).

5. The frame (206) of any preceding claim wherein the frame (206) is further adapted to be covered by a casing (202).

6. The frame (206) of claim 2 further comprising a fuel tank (318, 330) connected to the fuel channel (320) the fuel tank (318, 330) being adapted to store fuel and supply fuel to the fuel cell (308).

7. The frame (206) of claim 6 wherein the fuel tank (318, 330) comprises a fuel input port (322) adapted to introduce fuel into the fuel tank (318, 330).

8. The frame (206) of claim 3 further comprising a residue tank (310, 340) adapted to collect the residue from the residue channel (312).

9. The frame (206) of claim 8 wherein the residue tank (310, 340) comprises a residue output port (314) adapted to discharge the residue.

## Patentansprüche

1. Ein Rahmen (206) einer elektronischen tragbaren Vorrichtung (200), wobei der Rahmen (206) aufweist:
zumindest eine Brennstoffzelle (308);
zumindest einen Einlass (302), der ausgebildet ist, Brennstoff in die zumindest eine Brennstoffzelle (308) einzuführen;
zumindest einen Ablauf (304), der ausgebildet ist, einen Rest abzulassen, der durch eine Reaktion der zumindest einen Brennstoffzelle (308) erzeugt wird; und
zumindest einen Verbinder (306), der ausgebildet ist, die zumindest eine Brennstoffzelle (308) mit der elektronischen tragbaren Vorrichtung (200) elektrisch zu verbinden.

2. Der Rahmen (206) gemäß Anspruch 1, wobei der zumindest eine Einlass (302) ausgebildet ist, mit einem Brennstoffkanal (320) verbunden zu werden, um Brennstoff an den zumindest einen Einlass (302) zu liefern.

3. Der Rahmen (206) gemäß einem vorhergehenden Anspruch, wobei der zumindest eine Ablauf (302) ausgebildet ist, mit einem Rest-Kanal (312) verbunden zu werden, um den Rest zu sammeln.

4. Der Rahmen (206) gemäß einem vorhergehenden Anspruch, wobei der Rahmen (206) weiter ausgebildet ist, zumindest eine elektronische Komponente (204) darin einzubetten.

5. Der Rahmen (206) gemäß einem vorhergehenden Anspruch, wobei der Rahmen (206) weiter ausgebildet ist, von einem Gehäuse (202) abgedeckt zu werden.

6. Der Rahmen (206) gemäß Anspruch 2, der weiter einen Brennstofftank (318, 330) aufweist, der mit dem Brennstoffkanal (320) verbunden ist, wobei der Brennstofftank (318, 330) ausgebildet ist, Brennstoff aufzunehmen und Brennstoff an die Brennstoffzelle (308) zu liefern.

7. Der Rahmen (206) gemäß Anspruch 6, wobei der Brennstofftank (318, 330) einen Brennstoffeinlassanschluss (322) aufweist, der ausgebildet ist, Brennstoff in den Brennstofftank (318, 330) einzuführen.

8. Der Rahmen (206) gemäß Anspruch 3, der weiter einen Rest-Tank (310, 340) aufweist, der ausgebildet ist, den Rest aus dem Rest-Kanal (312) zu sammeln.

9. Der Rahmen (206) gemäß Anspruch 8, wobei der Rest-Tank (310, 340) einen Restablaufanschluss (314) aufweist, der ausgebildet ist, den Rest abzulassen.

## Revendications

1. Châssis (206) de dispositif électronique portable (200), le châssis (206) comprenant :
au moins une pile à combustible (308) ;
au moins une entrée (302) conçue pour introduire le combustible dans l'au moins une pile à combustible (308) ;
au moins un canal d'évacuation (304) conçu pour évacuer un résidu produit par une réaction de l'au moins une pile à combustible (308) ; et
au moins un connecteur (306) conçu pour relier électriquement l'au moins une pile à combustible (308) au dispositif électronique portable (200).

2. Châssis (206) selon la revendication 1, dans lequel l'au moins une entrée (302) est conçue pour être reliée à un canal à combustible (320) pour distribution de combustible jusqu'à l'au moins une entrée (302).

3. Châssis (206) selon l'une quelconque des revendications précédentes, dans lequel l'au moins un canal d'évacuation (304) est conçu pour être relié à un canal à résidu (312) pour recueillir le résidu.

4. Châssis (206) selon l'une quelconque des revendications précédentes, dans lequel le châssis (206) est, en outre, conçu pour enrober au moins un composant électronique en son sein (204).

5. Châssis (206) selon l'une quelconque des revendications précédentes, dans lequel le châssis (206) est, en outre, conçu pour être recouvert par un boîtier (202).

6. Châssis (206) selon la revendication 2, comprenant, en outre, un réservoir de combustible (318, 330) relié au canal à combustible (320), le réservoir de combustible (318, 330) étant conçu pour stocker le combustible et distribuer du combustible jusqu'à la pile à combustible (308).

7. Châssis (206) selon la revendication 6, dans lequel le réservoir de combustible (318, 330) comprend un orifice d'entrée de combustible (322) conçu pour introduire du combustible dans le réservoir de combustible (318, 330).

8. Châssis (206) selon la revendication 3, comprenant, en outre, un réservoir de résidu (310, 340) conçu pour recueillir le résidu provenant du canal à résidu (312).

9. Châssis (206) selon la revendication 8, dans lequel le réservoir de résidu (310, 340) comprend un orifice de sortie de résidu (314) conçu pour décharger le résidu.
